# EUROPEAN PATENT APPLICATION

(11) **EP 2 562 989 A2**
(43) Date of publication of application: **27.02.2013**
(21) Application number: 12193676.9
(22) Date of filing: 20.04.2007
(51) Int. Cl.: H04L 29/06, H04W 12/10

(54) **Method and device for operation processing, and method and server for determining validity of a service operation**

(30) Priority: 24.04.2006 CN 200610076004; 01.02.2007 CN 200710006445
(62) Divisional of application: 07720883.3
(71) Applicant: Huawei Technologies Co., Ltd., Longgang District, Shenzhen Guangdong 518129 (CN)
(72) Inventor: Xiao, Chaohai, 518129 Shenzhen (CN)
(74) Representative: Epping - Hermann - Fischer

(57) **Abstract**

The embodiments of the present invention provide a method and a device for operation processing, and a server for determining validity of a service operation. The method for operation processing includes: receiving a service message sent by a network element; determining validity of the network element according to the service message; determining whether a service request operation sent by the valid network element is a valid service operation; determining whether the service message sent by the network element is a Server-Assignment-Request (SAR) message when it is determined that the service request operation is a valid service operation, and determining a designated operation in the SAR message if it is determined that the service message is an SAR message; and performing the designated operation when the designated operation is a valid operation. The device includes a receiving unit, a validity determining unit, a first determining unit, a second determining unit, a designated-operation determining unit and a determining and executing unit. The server for determining the validity of a service operation includes an interface, a parsing unit and a service processing unit. Therefore, the security of user data on the HSS side and the processing efficiency of valid operation are improved, and the SAR/SAA interaction process is perfected.

## Description

This application claims the benefit of CN Application No. 200610076004.3 filed on April 24, 2006, entitled "METHOD FOR PROCESSING AN OPERATION IN AN IP MULTIMEDIA SUBSYSTEM, AND HOME SUBSCRIBER SERVER", and CN Application No. 200710006445.0 filed on February 1, 2007, entitled "METHOD AND SERVER FOR DETERMINING VALIDITY OF A NETWORK ELEMENT SERVICE OPERATION", which are incorporated herein by reference in their entities.

### Field of the Invention

The present invention relates to the technical field of network communication, and more particularly, to a method and a device for operation processing and a method and a server for determining the validity of a service operation.

### Background of the Invention

The core part of an IP Multimedia Subsystem (IMS) mainly includes network elements such as Proxy Call Session Control Function (P-CSCF), Interrogating CSCF (I-CSCF), Serving CSCF (S-CSCF), Home Subscriber Server (HSS), Application Server (AS) and so on. The P-CSCF provides a proxy function, in other words, it receives and forwards a service request. The I-CSCF provides functions of service node allocation for users in local domain, route query and topology hiding among IMS domains. The S-CSCF is responsible for registration and authentication of UE and session control, and performs basic session routing function for calling and called IMS users. The S-CSCF triggers a value-added service routing to the AS and interacts with the AS for service control according to IMS trigger rules subscribed by a user, when conditions are met. The HSS is a centralized and integrated database for storing the subscription information of IMS users in the home network, including basic identities, routing information and service subscription information, etc. The AS mainly provides IP multimedia value-added services for IMS users. In the IMS, two kinds of user identities, IMS Private Identity (IMPI) and IMS Public Identity (IMPU), are introduced. IMPI is the private identity of an IMS user and configured to identify a User Equipment (UE), and corresponds to the UE. IMPU is the public identity of IMS users, and it is a kind of symbol for identifying the communication among the IMS users, and is equivalent to a phone number. User state refers to the state of an IMPI-IMPU pair.

Registration process is a process in which a bidirectional authentication is performed between a UE and a network and network resources are allocated. Registration states of a user include Authentication Pending, Registered, Unregistered and Not Registered. The four states can be converted to each other.

Deregistration process is a process in which various resources allocated to a UE are released, which corresponds to the registration process. Depending on different initiating objects, deregistration may be further divided into user deregistration and network deregistration. The network deregistration may be further divided into HSS-initiated network deregistration and S-CSCF-initiated network deregistration.

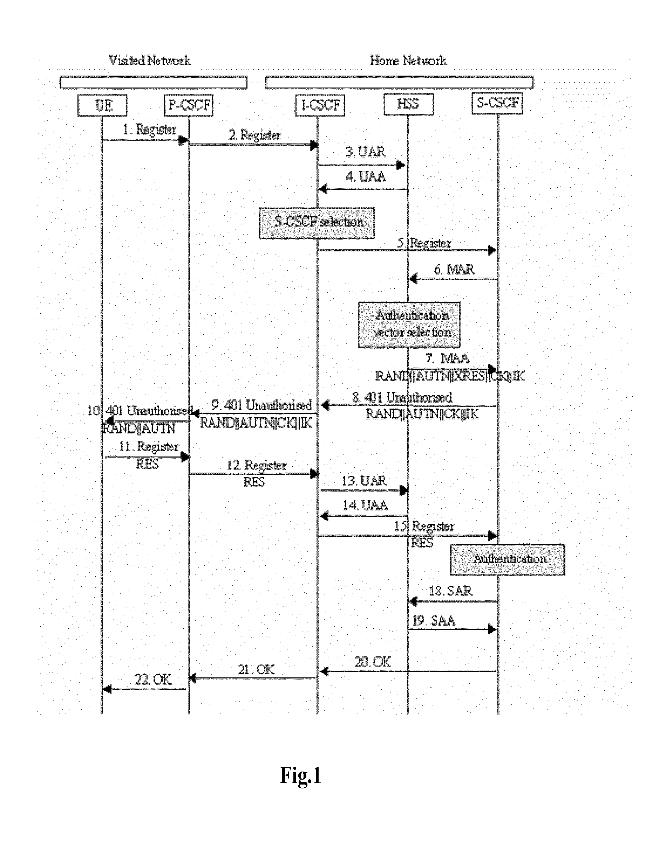

The first registration of a UE is initiated by the UE when it accesses an IMS network for the first time, for example, when the UE is powered on. The UE accesses the IMS network via a P-CSCF. A complete registration process is shown in Fig.1.

As shown in Fig.1, in Step 1, after the UE has obtained a path interconnected with an IP network at the visited network, it sends a Session Initiated Protocol (SIP) Register message flow to the Proxy SCCF (P-CSCF). The main Information Elements (IEs) of the SIP Register message flow include IMPU, IMPI, home network domain name and UE IP address, etc.

In Step 2, upon receipt of the SIP Register message flow, the P-CSCF examines the "home network domain name" to search for the Interrogating CSCF (I-CSCF). The P-CSCF forwards the Register message flow to the I-CSCF, with the main IEs of the Register message flow including P-CSCF address/domain name, IMPU, IMPI, P-CSCF network identifier and UE IP address, etc.

In Step 3, the I-CSCF sends a User-Authorization-Request (UAR) message flow to the HSS for authenticating the access right of the UE. The main IEs of the UAR message flow include IMPU, IMPI and P-CSCF network identifier, etc.

In Step 3, the HSS checks whether the user has registered already. The HSS determines whether the user is allowed to register in that P-CSCF network according to the UE subscription and operator limitations/restrictions if any. If the UE is allowed to register via the P-CSCF, the process proceeds to Step 4.

In Step 4, the HSS determines whether the user is allowed to check in. If the user is allowed to check in, the HSS sends a User Authorization Answer (UAA) to the I-CSCF as a response message flow of the UAR. The response message flow mainly returns the name of the S-CSCF that can serve the UE (here, also referred to as network element name of the S-CSCF) or capabilities of the S-CSCF. If the HSS knows the S-CSCF name for the UE, it returns the S-CSCF name. When it is required to reselect an S-CSCF, the HSS shall return the capabilities of the S-CSCF. When the S-CSCF name and the S-CSCF capabilities are contained in the UAA, the I-CSCF may perform a new S-CSCF assignment. When only capabilities are returned in the UAA, the I-CSCF shall select a new S-CSCF according to the returned capabilities. Then, the process proceeds to Step 5.

In Step 4, if the checking in HSS is not successful, the HSS shall return a UAA rejecting the registration attempt, and the current registration process terminates.

In Step 5, the I-CSCF, using the name of the S-CSCF, determines the address of the S-CSCF through a name-address resolution mechanism. The I-CSCF also determines the name of a suitable home network contact point, based on information received from the HSS. The I-CSCF then sends the register message flow to the selected S-CSCF.

In Step 6, the S-CSCF sends a Media Authentication Request (MAR) message flow to the HSS for applying for authentication quintuples. The main IEs of the MAR message flow include IMPU, IMPI, S-CSCF name, the number of authentication quintuples applied for and the mode of authentication applied for, etc.

In Step 7, the HSS stores the S-CSCF name issued for the UE, and returns a Media Authentication Answer (MAA) message flow to the S-CSCF after setting the registration state of the UE as Authentication Pending. The main IEs of the returned MAA include IMPU, IMPI, the number of authentication quintuples and all of the authentication quintuples, etc.

In Step 8 to Step 15, the S-CSCF applies one of the authentication quintuples to the bidirectional authentication process between the UE and the IMS network.

In Step 16, the S-CSCF sends a Server-Assignment-Request (SAR) registration notification message flow to the HSS. The main IEs of the message flow include IMPU, IMPI and S-CSCF name, etc.

In Step 17, if the SAR is a registration notification message and the S-CSCF name in the request is consistent with the S-CSCF name stored in the HSS, the HSS clears the Authentication Pending state of the UE and sets the registration state as Registered, and then issues user data and charging information related with the UE to the S-CSCF via a Server-Assignment-Answer (SAA) message flow.

In Step 18 to Step 20, the S-CSCF notifies the UE of the SIP message flow indicating that the register is successful, via the I-CSCF and the P-CSCF.

Fig.1 illustrates the process in which a UE initiates a register for the first time, i.e., the whole process in which a UE accesses an IMS network for the first time. The process corresponding to the registration process is deregistration process. Deregistration is further divided into UE end-initiated deregistration and IMS network side-initiated deregistration. The IMS network side-initiated deregistration is further divided into HSS-initiated deregistration and S-CSCF-initiated deregistration. The process in which a registered UE initiates deregistration is described hereunder.

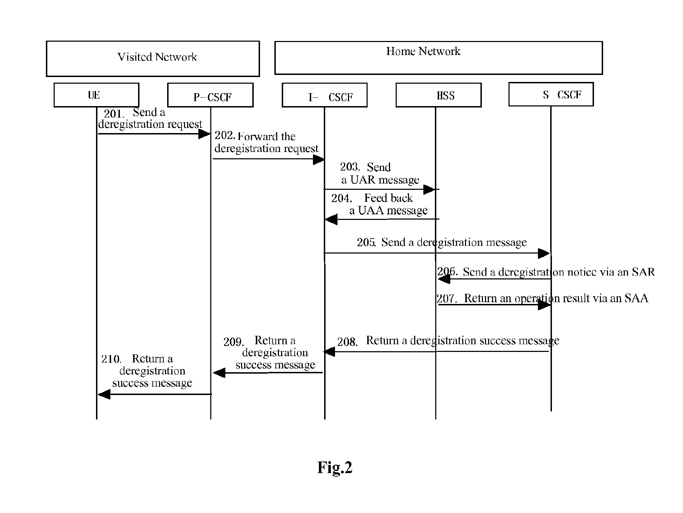

Fig.2 is a schematic flow chart showing a process in which a UE performs deregistration in the prior art. As shown in Fig.2, the process includes the steps as follows.

In Step 201, a UE initiates a deregistration message to the P-CSCF. To deregister, the UE initiates an SIP REGISTER request with an expiration value of zero.

The deregistration message contains IMPU, IMPI, home network domain name and UE IP address, etc.

In Step 202, the P-CSCF sends the deregistration message to the I-CSCF.

In this step, the P-CSCF searches for an I-CSCF according to the home network domain name received in Step 201 and sends the deregistration message to the searched I-CSCF.

The deregistration message contains address or domain name of the P-CSCF, IMPU, IMPI, P-CSCF network identity and UE IP address.

In Step 203, the I-CSCF sends a UAR message to the HSS.

In this step, the I-CSCF sends the UAR message to the HSS for querying the state of the UE. The UAR message contains IMPI, IMPU, P-CSCF network identity and I-CSCF host name, etc.

In Step 204, the HSS determines that the UE is already registered, and sends a UAA message to the I-CSCF.

The network element name of the S-CSCF serving the UE currently and the host name of the I-CSCF are carried in the UAA message.

In Step 205, the I-CSCS sends a deregistration message to the S-CSCF.

In this step, the I-CSCF queries for and obtains the S-CSCF IP address by using the S-CSCF network element name obtained in Step 204 and according to the name-address resolution mechanism, and sends a deregistration message to the S-CSCF.

In Step 206, the S-CSCF sends a deregistration notification to the HSS via an SAR message.

The SAR message contains IMPU, IMPI, the S-CSCF network element name and host name.

In Step 207, if the S-CSCF name in the SAR is consistent with the S-CSCF name stored in the HSS, the HSS changes the registration state of the UE into Not Registered or Unregistered.

In this step, the HSS shall clear or reserve the stored network element name of the S-CSCF that serving the UE, and return an operation result to the S-CSCF via an SAA message.

In Step 208 to Step 210, the S-CSCF sends to the UE a message indicating that the deregistration is successful, via the I-CSCF and the P-CSCF.

In the embodiments shown in Fig.1 and Fig.2, UE registration and UE deregistration processes in the prior art are introduced. AS is a network element that provides IP multimedia value-added service in an IMS. An As can query an HSS for data by using a User Data Request (UDR) message, or subscribe to the HSS for subscriber data by using a Subscribe Notifications Request (SNR) message. A process in which an AS subscribes is described hereunder.

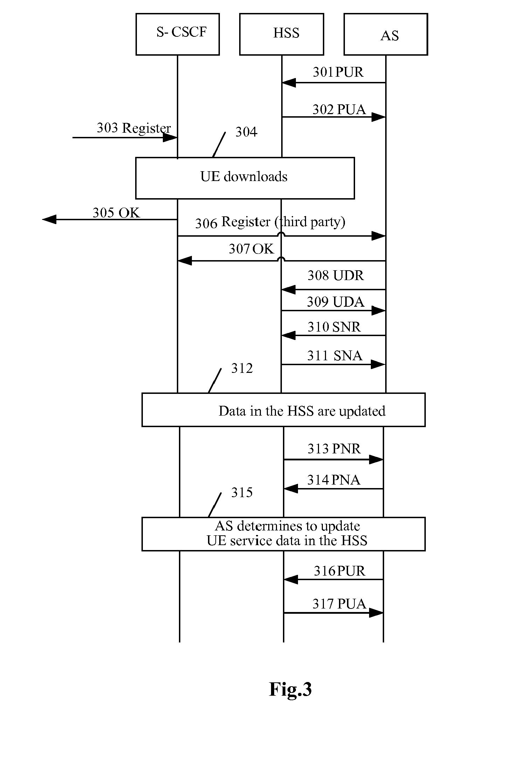

Fig.3 is a schematic flow chart showing a process in which an AS subscribes in the prior art. As shown in Fig.3, the process includes the steps as follows.

In Step 301, the AS sends a Profile Update Request (PUR) message to an HSS.

In this step, the AS stores user subscription service data, such as transparent data, for a UE in the HSS via a PUR message.

In Step 302, the HSS sends a Profile Update Answer (PUA) message to the AS.

In Step 303, the UE initiates a register to the S-CSCF.

In this step, the process in which the UE initiates a register is the same as that shown in Fig.1, so it will not be repeated here.

In Step 304, the UE pulls user profile data.

In this step, the user pulls the user profile data, such as Initial Filter Criterion (IFC) for the user, from the HSS via an SAR message.

In Step 305, the S-CSCF returns a message 200 OK to the user.

This message indicates that the register is successful.

In Step 306, the S-CSCF sends a third-party SIP register message to the AS.

The S-CSCF notifies the AS that the UE is already registered successfully by sending the third-party SIP register message to the AS.

In Step 307, the AS sends a 200 OK message to the S-CSCF.

In Step 308, the AS sends a UDR message to the HSS.

Data is pulled from the HSS via the message. The data is necessary for providing a service, and the network element name and the host name of the AS are carried in the message.

In Step 309, the HSS sends a User Data Answer (UDA) to the AS.

The service data that the AS requests for pulling is carried in this message.

In Step 310, the AS sends an SNR message to the HSS.

When service data changes, the AS subscribes to the HSS for the changed service data via the SNR message. The network element name and the host name of the AS are carried in the message.

In Step 311, the HSS sends a Subscription Notification Answer (SNA) message to the AS.

The HSS returns an operation result to the AS via the SNA message.

In Step 312, the service data in the HSS is updated.

In Step 313, the HSS sends a Push Notification Request (PNR) message to the AS.

The HSS notifies the AS that service data in Step 310 has been updated, by sending the PNR message to the AS.

In Step 314, the AS sends a Push Notification Answer (PNA) message to the HSS.

The AS notifies the HSS of the receipt of the notification, via the PNA message.

In Step 315,the AS determines that the data in the HSS is to be updated.

In Step 316, the AS sends a PUR message to the HSS.

The AS updates the service data of the UE via the PUR message.

In Step 317, the HSS sends a PUA message to the AS.

The HSS notifies the AS of an operation result of data update, via the PUA message.

It can be seen from the above embodiments that when a UE is registered, the S-CSCF network element name and host name are carried in the MAR or SAR message; and when the UE or the network initiates a deregistration, the S-CSCF network element name and host name are carried in an SAR message for network deregistration operation initiated by the S-CSCF.

The AS network element name and host name are carried in the UDR message from the AS used to pull the IFC data and the SNR message from the AS used to subscribe for the IFC data of the user.

There is an Attribute Value Pair (AVP) named Server-Name and an AVP named Origin-Host in each of the above MAR message, SAR message, UDR message and SNR message. The value of the AVP named Server-Name is the network element name of the S-CSCF.

When a UAR message and a Location Info Request (LIR) message are carried in the service request initiated by the I-CSCF, and when a PUR message is carried in the service request initiated by the AS, the host name is carried in the UAR message, the LIR message and the PUR message. The host name is the value of the AVP named Origin-Host.

The naming format of the network element name of an S-CSCF conforms to that of SIP (Uniform Resource Identifier) URI. For example, sip:s-cscf@huawei.com is a valid network element name of the S-CSCF. However, the naming format of the host name is not necessary to conform to the naming principle of SIP URI. For example, s-cscf, s-cscf.huawei.com and sip:s-cscf@huawei.com are all valid host names of the S-CSCF. The naming principle of an AS is the same as that of the S-CSCF. For example, the network element name of an AS may be sip:as@huawei.com, and the host name of an AS may be as, as.huawei.com or sip:as@huawei.com, etc.

In the prior art, a method for an HSS to determine the validity of a network element service operation is as follows: the HSS compares the network element name carried by the network element with a network element name pre-configured in the HSS, and if the two names are identical, then it is determined that the service operation of the network element is a valid one. The network element includes S-CSCF, AS, I-CSCF and so on.

However, in practical operation, the network element name of a network element may be obtained by other network elements in the network. For example, other network elements can obtain the network element name via a packet or a network element maintenance tool. Any other network element can obtain the network element name of an S-CSCF that initiates a service, so during the above operations of UE registration, UE deregistration, UE being called and S-CSCF-initiated network deregistration, when any one of other invalid network elements initiates the above service requests via the obtained network element name of the S-CSCF, it is still determined by the HSS that the service operations initiated by the network element are valid network element service operations. Therefore, the validity of S-CSCF service operation cannot be ensured.

Additionally, when an AS is in the operation of querying for user IFC data and subscribing to user IFC data, any other AS can obtain the network element name of this AS, and query the user IFC data and subscribe to the user IFC data with the network element name. Since the network element name is correct, the HSS will determine that the service operation of the network element is a valid network element service operation, and the validity of the AS service operation that carries the UDR and SNR messages can't be ensured.

Moreover, only the host name is carried in the UAR message and the LIR message of a service request initiated by the I-CSCF and in the PUR message of a service request initiated by the AS. Thus, according to the network element name, the HSS cannot determine the validity of the service operations performed by the I-CSCF and the AS which carries the PUR message. As a result, the validity of the service operations performed by the I-CSCF and the AS that carries the PUR message cannot be ensured.

Thus it can be seen that in the prior art, for an HSS, it is mainly by comparing a stored network element name in the HSS with the network element name carried in a request message from a network element to determine the validity of a network element service operation. If the two names are identical, it is determined that the network element service operation is a valid network element service operation. The network element includes S-CSCF, AS, I-CSCF and so on. However, in practical operation, the network element name may be obtained by other network elements in the network. For example, other network elements may obtain the network element name via a packet or a network element maintenance tool. Since any other network element can obtain the network element name of an S-CSCF that initiates a service, during the above operations of UE registration, UE deregistration, UE-called and S-CSCF-initiated network deregistration, when any one of other invalid network elements initiates the above service requests via the network element name of the obtained S-CSCF, it is still determined by the HSS that the service operations initiated by the network element are valid network element service operations. Therefore, the validity of S-CSCF service operation cannot be ensured.

Additionally, in the UE registration process as shown in Fig.1, there is an Attribute Value Pair (AVP) named Server-Assignment-Type in the SAR message flow. The main function of the AVP is to define various operation codes that are configured to instruct the HSS to execute such as registration for the first time, re-registration, deregistration and so on. The value of the codes includes NO_ASSIGNMENT, REGISTRATION, RE_REGISTRATION and so on (totally 12 values, as shown in the 3GPP TS 29228 specification). However, in the existing 3GPP TS 29228 specification, only user validity and the necessary processing procedures are specified for the operations defined for the above SAR, and no specification is made on the validity of various operations initiated by the S-CSCF. For example, when a user is in Unregistered state, the S-CSCF initiates a Re-registration operation; and if the HSS performs this Re-registration operation, hidden troubles on operation security may be brought to data stored in the HSS.
GONZALO CAMARILLO, MIGUEL A, GARCIA-MARTIN: "The 3G IP Multimedia Subsystem (IMS) - Chapter 7 AAA in the IMS" 1 July 2005 (2005-07-01), JOHN WILEEY&SONS, XP002482734 ISBN: 0-470-87156-3 discloses that authentication and authorization are generally linked I the IMS. In contrast, accounting is a separate function executed by different nodes.

### Summary of the Invention

Embodiments of the invention provide a method and a device for operation processing and a method and a server for determining the validity of a service operation, so as to eliminate hidden troubles on HSS-side user data security in the prior art and improve the efficiency of processing valid operations.

In view of the above technical problems, an embodiment of the invention provides a method for operation processing in an IP Multimedia Subsystem (IMS). The method includes:
receiving a service message sent by a network element;
determining validity of the network element according to the service message;
when it is determined that the network element is valid, determining whether a service request operation sent by the valid network element is a valid service operation;
determining whether the service message sent by the network element is a Server-Assignment-Request (SAR) message when it is determined that the service request operation is a valid service operation, and determining an operation carried in the SAR message if it is determined that the service message is an SAR message; and
performing the operation when the operation is a valid operation.

Additionally, an embodiment of the invention provides a device for operation processing in IMS. The device includes:
a receiving unit, configured to receive a service message sent by a network element and obtain corresponding data configuration message;
a validity determining unit, configured to determine validity of the network element according to the service message and the data configuration;
a first determining unit, configured to determine whether the service request operation sent by a valid network element is a valid service operation, and send a determination result indicating that the service request operation is a valid service operation;
a second determining unit, configured to determine whether the service message sent by the network element is a Server-Assignment-Request (SAR) message according to the received determination result;
a carried-operation determining unit, configured to determine the operation in the received SAR message; and
a determining and executing unit, coupled to the carried-operation determining unit and configured to determine whether the operation carried in the SAR message is valid and to perform the valid operation.

Additionally, an embodiment of the invention provides a method for operation processing in IMS, which is configured to be utilized in an interaction process of a Server-Assignment-Request (SAR) and Server-Assignment-Answer (SAA) message flows between a Serving Call Session Control Function (S-CSCF) and a Home Subscriber Server (HSS). During the interaction process, the method comprises:
determining, by the HSS, an operation carried in an SAR message flow according to information carried in the SAR message flow, after receiving the SAR message flow transferred from the S-CSCF; and
performing, by the HSS, the operation when it is determined that the operation is a valid operation according to a user registration state.

Moreover, an embodiment of the invention provides a method for determining the validity of a network element service operation in IMS. The method includes: pre-configuring a first host name of a network element;
receiving a service request initiated by the network element, obtaining a message initiated by the network element, and obtaining a second host name of the network element by parsing;
determining whether a first network element type of the network element is valid according to the second host name and the message;
when the first network element type of the network element is valid, comparing the second host name obtained by parsing with the configured first host name, and determining that the network element service operation is a valid network element service operation when the second host name obtained by parsing and the configured first host name are consistent with each other.

Correspondingly, an embodiment of the invention provides a server for determining the validity of a network element service operation in IMS, which is configured to store user subscription information. The server includes an interface, a parsing unit and a service processing unit;
the interface is configured to receive a service request initiated by a network element and send the service request to the parsing unit;
the parsing unit is configured to receive the service request, obtain a message initiated by the network element, obtain a first host name of the network element by parsing, and send the first host name and the message to the service processing unit; and
the service processing unit is configured to configure a second host name of the network element, receive the first host name and message sent by the parsing unit, determine whether a first network element type of the network element is valid, compare the received first host name with the configured second host name when it is determined that the first network element type of the network element is valid, determine that the network element service operation is a valid network element service operation when the received first host name and the configured second host name are consistent with each other.

It can be seen from the above technical solutions that in one embodiment of the invention, it is ensured that the validity of a network element service operation can be determined accurately by determining whether the network element type is valid and determining the validity of a network element service operation, thus the security of user data and the reliability of IMS service are ensured. Then, the operation carried in the SAR message flow is filtered by determining the validity of the operation carried in the SAR message flow in conjunction with the registration state of the user, so that the HSS is prevented from performing an invalid operation. The HSS resources occupied by invalid operations are reduced, and additionally, hidden troubles on the security of data storage in the HSS are reduced, and the efficiency of processing valid operations is improved.

### Brief Description of the Drawings

Fig. 1 is a flow chart of a first-time registration process in the prior art.

Fig.2 is a flow chart of user deregistration process in the prior art.

Fig.3 is a flow chart of user subscription process in the prior art.

Fig.4 is a flow chart of the method for operation processing according to an embodiment of the invention.

Fig.5 is a flow chart of a process for determining the validity of a network element service operation in a method for operation processing according to an embodiment of the invention.

Fig.6 is another flow chart of a process for determining the validity of a network element service operation in a method for operation processing according to an embodiment of the invention.

Fig.7 is a flow chart of a process for determining the validity of an operation in a method for operation processing according to an embodiment of the invention.

Fig.8 is a flow chart of the process for determining the operation carried in an SAR message shown in Fig.7.

Fig.9 is another flow chart of the process for determining the operation carried in an SAR message shown in Fig.7.

Fig.10 is a schematic structure diagram of a device for operation processing according to an embodiment of the invention.

Fig.11 is a schematic structure diagram of a server for determining the validity of a network element service operation according to an embodiment of the invention.

Fig.12 is a schematic structure diagram of the service data processing unit shown in Fig.11.

### Detailed Description of the Embodiments

The invention will now be further illustrated in detail in conjunction with the drawings and specific embodiments.

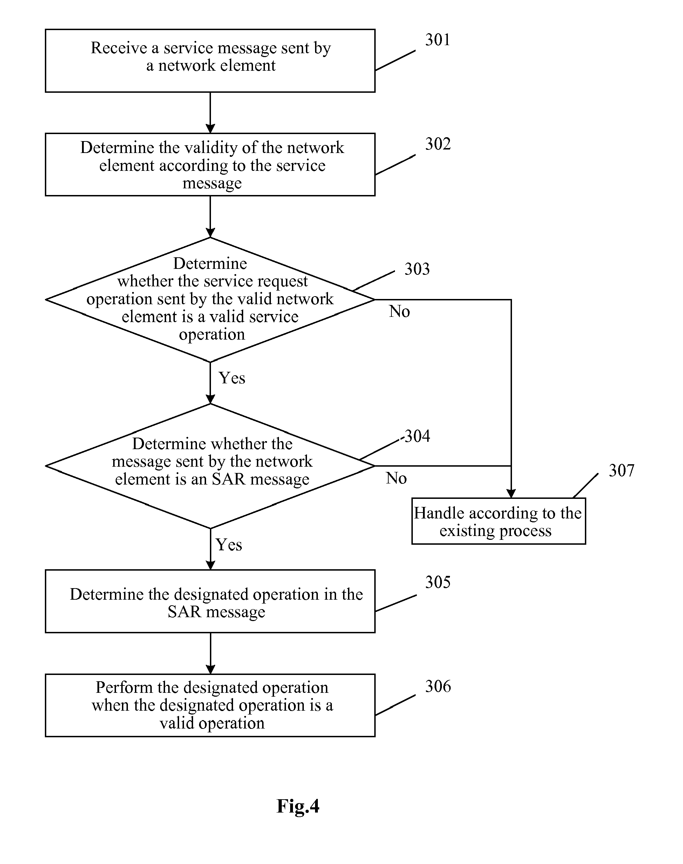

Fig.4 is a flow chart of a method for operation processing according to an embodiment of the invention. The method includes the steps as follows.

In Step 301, a service message sent by a network element is received.

In Step 302, the validity of the network element is determined according to the service message.

In Step 303, whether the service request operation sent by the valid network element is a valid service operation is determined; if the operation is not valid, the process proceeds to Step 307 and then terminates.

In Step 304, If the operation is valid, whether the message sent by the network element is an SAR message is determined; if the message is an SAR message, an operation carried in the SAR message is determined (i.e., Step 305); if the message is not an SAR message, the process proceeds to Step 307 and then terminates.

In Step 306, the operation is performed when the operation is a valid operation.

In Step 307, the process is handled following the existing process.

In the embodiment of the invention, first of all, a first threshold supplementation is performed for a request service operation in view of validity determination of network element name and/or host name. Then, a validity supplementation is performed for the request service operation in view of service logic, which is a perfecting determination on an inner hierarchy for the service. Thus, security of the service data can be ensured.

The above steps will be illustrated respectively so as to be understood much better by those skilled in the art.

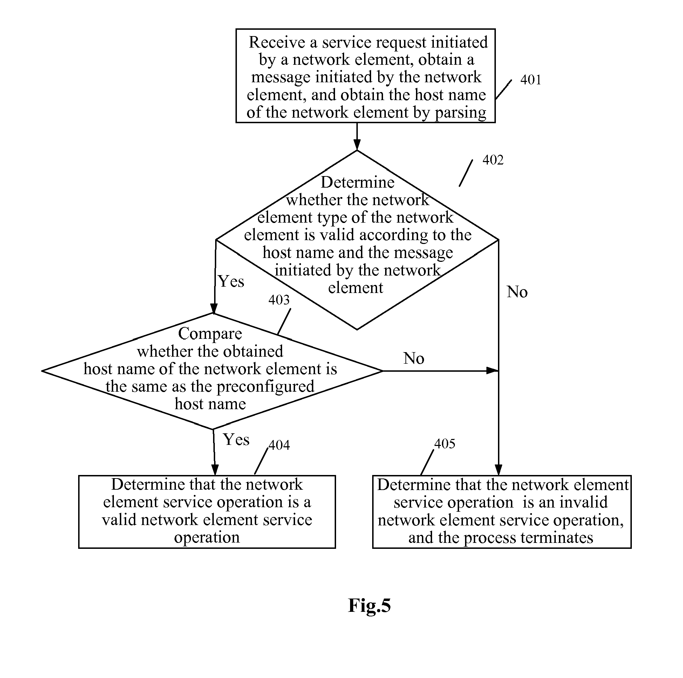

In Step 301 to Step 303, the host name and the network element name of network elements are pre-configured. A service request initiated by a network element is received. The host name of the network element is obtained by parsing the request, and the corresponding network element type is searched according to the host name. The type of the request message from the network element is obtained, and the type of the network element that initiates the request is determined from the message type. Then the obtained network element type is compared with the searched network element type, so as to determine whether the network element type is valid. If the network element type of the network element that initiates the request is valid, whether the obtained host name of the network element is identical to the pre-configured host name of the network element is determined. If the two host names are identical, it is determined that the service operation of the network element is a valid network element service operation. The validity of the service operation of the network element can be determined simply by determining the validity of the network element name and/or host name for a request service operation, which can also ensure the security of user data and the reliability of IMS service. The specific process is illustrated in detail by taking Fig.4 and Fig.5 as an example. The specific process is shown in Fig.4.

Fig.5 is a flow chart of a process for determining the validity of a network element service operation in a method for operation processing according to an embodiment of the invention. As shown in Fig.5, the method includes the steps as follows.

Step 401: a service request initiated by a network element is received, a message initiated by the network element is obtained, and the host name of the network element is obtained by parsing.

In this step, the host name is obtained from the service request initiated by the network element. The network element may be an I-CSCF or an AS carrying a PUR message.

Host names are carried in corresponding messages. For example, the host name of an S-CSCF is carried in an MAR or SAR message initiated by the S-CSCF, and the host name of an AS is carried in a PUR message initiated by the AS.

The host name is stored in the AVP named Origin-Host carried in each message.

In Step 402, whether the network element type of the network element is valid is determined according to the host name and the message initiated by the network element. If the network element type is valid, the process proceeds to Step 403; otherwise, the process proceeds to Step 405.

In this step, the specific determination method is as follows. The corresponding network element type ID is searched in a pre-configured network element type code table according to the host name. A network element type is determined according to the network element type ID, and a network element type is determined according to the message initiated by the network element. These two network element types are compared with each other. If they are consistent with each other, which means that the network element type is valid, the process proceeds to Step 403; otherwise, the process proceeds to Step 405. The network element type code table refers to a network element type code table storing host name, network element type ID, network element name and the correlation thereof.

In this step, the method for determining the network element type according to the message initiated by the network element includes: determining the type of the message; if the message includes at least one of a UAR message and an LIR message, determining that the network element type is I-CSCF; if the message includes at least one of a UDR message, an SNR and a PUR message, determining that the network element type is AS; and if the message includes at least one of an MAR message and an SAR message, determining that network element is an S-CSCF.

In Step 403, whether the obtained host name of the network element is identical to the pre-configured host name is determined by comparison. If the two host names are identical, the process proceeds to Step 404; otherwise, the process proceeds to Step 405.

The pre-configured host name refers to the host name of the network element pre-configured before Step 401.

In Step 404, it is determined that the network element service operation is a valid network element service operation.

In Step 405, it is determined that the service operation of the network element is an invalid network element service operation, and the process terminates.

In this embodiment, if the network element that initiates the service request is an S-CSCF or an AS carrying a UDR message for querying IFC or an SNR message for subscribing IFC, the method further includes the following steps after Step 403: pre-configuring the network element name of the network element, determining whether the network element name carried in the message initiated by the network element is consistent with the pre-configured network element name; if they are consistent with each other, proceeding to Step 404; otherwise, proceeding to Step 405. It shall be noted that the step of determining whether the two network element names are consistent with each other may be performed before Step 403, in other words, Step 403 may be performed when the two network element names are consistent with each other.

The network element service operation concerned in the embodiment of the invention mainly includes:
UE REGISTRATION, UE RE_REGISTRATION,
UNREGISTERED_USER,
TIMEOUT_DEREGISTRATION,
TIMEOUT_DEREGISTRATION_STORE_SERVER_NAME,
USER_DEREGISTRATION,
USER_DEREGISTRATION_STORE_SERVER_NAME,
DEREGISTRATION_TOO_MUCH_DATA,
ADMINISTRATIVE_DEREGISTRATION,
AUTHENTICATION_FAILURE, and
AUTHENTICATION_TIMEOUT.

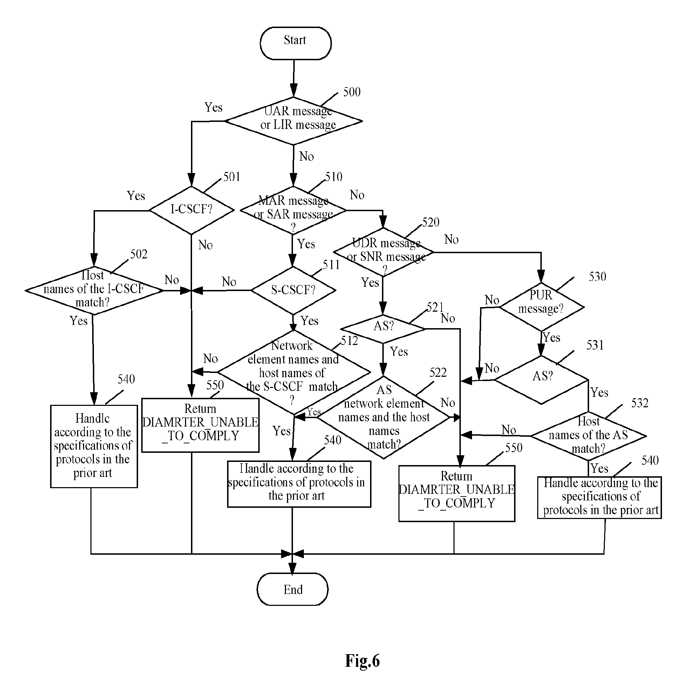

Fig.6 is another flow chart of a process for determining the validity of a network element service operation in a method for operation processing according to an embodiment of the invention. As shown in Fig.6, the method includes the steps as follows.

In Step 500, it is determined whether the received message is a UAR or LIR. If the received message is a URA or LIR, the process proceeds to Step 501; otherwise, the process proceeds to Step 510.

In this step, the message type is determined according to the AVP of the Command-Code in the message. Different values of the AVP of the Command-Code correspond to different message types, for which reference may be made to relevant protocol specifications, and which will not be repeated herein in detail.

In Step 501, it is determined whether the network element type I-CSCF is valid. If the network element type I-CSCF is valid, the process proceeds to Step 502; otherwise, the process proceeds to Step 550.

This step is implemented as follows: the network element type ID is searched according to the host name, and then the network element type is determined according to the network element type ID. The step of determining the network element type ID is shown in Table 1. Table 1 is a network element type code table.

**Table 1**

| Network Element Type ID | Network Element Type | Host Name | Network Element Name |
|---|---|---|---|
| 1 | I-CSCF | xx1 | sip:xxx1 |
| 2 | S-CSCF | xx2 | sip:xxx2 |
| 3 | AS | xx3 | sip:xxx3 |
| 4 | GGSN | xx4 | Not specified in the protocol specification |
| 5 | SGSN | xx5 | Not specified in the protocol specification |
| 6 | MSC Server | xx6 | Not specified in the protocol specification |
| 7 | GMSC Server | xx7 | Not specified in the protocol specification |

The network element type ID is searched from Table 1 according to the host name of the network element in the AVP named Origin-Host. The network element type is determined according to the network element type ID. For example, if the host name is xxx1, the corresponding network element type ID is searched from Table 1 as 1, and then it is determined that the network element type is I-CSCF.

In Step 501, since it is determined that the message initiated by the network element is a UAR or LIR, it can be determined that the network element is an I-CSCF. In this step, the network element types obtained in the above two ways are both I-CSCF, so it can be determined that the network element type is valid, I-CSCF, and the process proceeds to Step 502.

In Step 502, whether the host names of the I-CSCF match to each other is determined. If they match, the process proceeds to Step 540; otherwise, the process proceeds to Step 550.

In this step, the host name obtained from the UAR or LIR message is compared with host names pre-configured in Table 1 by the HSS. If there is no entry in the network element type code table that has the same host name as the obtained host name and the same network element type, it is determined that the service operation of the network element is an invalid network element service operation; otherwise, it is determined that the network element service operation is a valid one.

In Step 510, whether the received message is an MAR or an SAR message is determined. If the received message is an MAR or an SAR message, the process proceeds to Step 511; otherwise, the process proceeds to Step 520.

In this step, the message type is determined according to the value of the AVP of the Command-Code in the message. Different values of AVP of the Command-Code correspond to different message types, for which reference may be made to relevant protocol specifications, and which will not be repeated herein in detail.

In Step 511, it is determined whether the network element type S-CSCF is valid. If the network element type S-CSCF is valid, the process proceeds to Step 512; otherwise, the process proceeds to Step 550.

This step is implemented totally the same as Step 501, except that the message type and the network element type are different from those in Step 501, so it will not be repeated herein.

In Step 512, it is determined whether the network element names and the host names of the S-CSCF match to each other respectively. If the network element names and the host names of the S-CSCF match to each other respectively, the process proceeds to Step 540; otherwise, the process proceeds to Step 550.

In this step, the host name obtained from the MAR or SAR message is compared with host names configured in Table 1. If there is no entry in Table 1 that has the same host name as the obtained host name, it is determined that the service operation of the network element is an invalid network element service operation.

Otherwise, the corresponding network element type ID is searched from Table 1, and a pre-configured network element name is searched according to the network element type ID and the host name. The pre-configured network element name is compared with the network element name obtained from the MAR or SAR message. If the two network element names are identical, it is determined that the network element service operation is a valid network element service operation; otherwise, it is determined that the service operation of the network element is an invalid one.

A preferred method for obtaining the network element name is provided in this step, but it is not intended to limit the scope of the invention, and other methods for obtaining the network element name according to the host name may also be used. In this step, whether the network element names of the S-CSCF are consistent with each other can be determined firstly; and whether the host names of the S-CSCF are consistent with each other can be determined when the two network element names are consistent with each other.

In Step 520, it is determined whether the received message is a UDR message or an SNR message. If the received message is a UDR message or an SNR message, the process proceeds to Step 521; otherwise, the process proceeds to Step 530.

In this step, the message type is determined according to the value of the AVP of the Command-Code in the message. Different values of AVP of the Command-Code correspond to different message types, for which reference may be made to relevant protocol specifications, so it will not be repeated in detail herein.

In Step 521, it is determined whether the network element type AS is valid. If the network element type AS is valid, the process proceeds to Step 522; otherwise, the process proceeds to Step 550.

This step is implemented totally the same as Step 501, except that the message type and the network element type are different from those in Step 501, so it will not be repeated herein.

In Step 522, it is determined whether the network element names and the host names of the AS match to each other respectively. If the network element names and the host names of the AS match to each other respectively, the process proceeds to Step 540; otherwise, the process proceeds to Step 550.

The network element name and host name of the AS are carried in the UDR message for querying IFC, or carried in the SNR message for subscribing IFC.

This step is totally consistent with Step 512, except that the message types and the network element types are different from each other respectively, so it will not be repeated herein.

In Step 530, it is determined whether the received message is a PUR message. If the received message is a PUR message, the process proceeds to Step 531; otherwise, the process proceeds to Step 550.

In Step 531, it is determined whether the network element type AS is valid. If the network element type AS is valid, the process proceeds to Step 532; otherwise, the process proceeds to Step 550.

This step is implemented totally the same as Step 501, except that the message type and the network element type are different from those in Step 501, so it will not be repeated herein.

In Step 532, it is determined whether the host names of the AS match to each other. If the host names of the AS match to each other, the process proceeds to Step 540; otherwise, the process proceeds to Step 550.

In this step, a host name obtained from the PUR message is compared with host names in Table 1, if there is no entry in Table 1 having the same host name as the obtained host name and the same network element type, it is determined that the service operation of the network element is an invalid network element service operation; otherwise, it is determined that the network element service operation is a valid one.

In Step 540, the service operation initiated by the network element is handled according to the protocol specifications in the prior art, and the process terminates.

In Step 550, a response message is sent to the network element.

The response message is a message of which the Result-Code value is DIAMRTER_UNABLE_TO_COMPLY, indicating that the network element is an invalid network element.

In the embodiment as shown in Fig.6, determinations on the message types of UAR, LIR, MAR, SAR, UDR, SNR and PUR messages are made respectively in the order shown in Fig.6, and determinations on different network element types such as I-CSCF, S-CSCF and AS are made. In a practical service, there may be the case in which only a part of these operations are concerned, or the case in which all of the above operations are concerned, but in different orders. No matter in which mode, the method is implemented totally the same as that shown in the embodiment of Fig.6. Fig.6 is only a preferred embodiment of the invention, but not a limitation to the scope of the invention. The validity determination method of the embodiments of the invention does not go against the conformity of the determination method in 3GPP TS 29228 and 3GPP TS 29328.

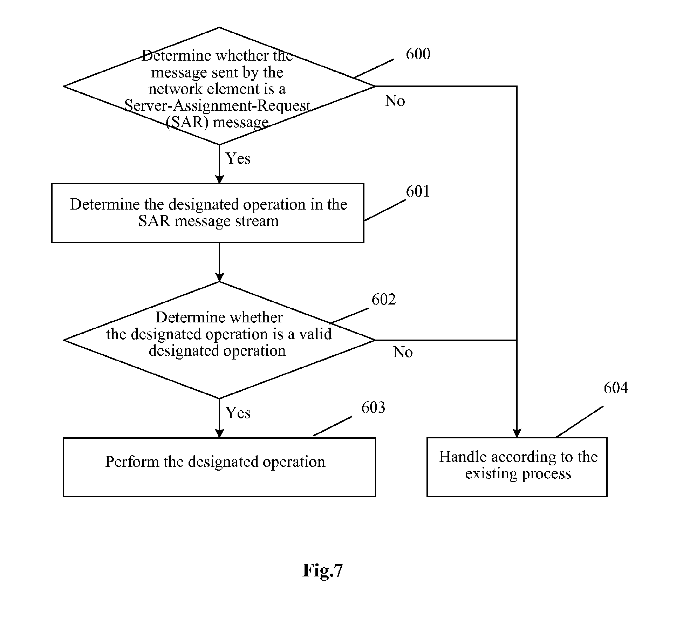

In Step 304 to Step 306 in Fig. 4, validity determination is performed on the service operation in view of service logic after it is determined that the service operation of the network element is a valid service operation, in other words, whether the message sent by the network element is an SAR message is determined. If the message sent by the network element is an SAR message, the operation carried in the SAR message is determined, and then whether the operation is valid is determined. If the operation is valid, the operation is performed. However, this process may also be used independently in the network, to determine whether the message sent by the network element is an SAR message in view of service logic for the request service operation. If the message sent by the network element is an SAR message, the operation carried in the SAR message is determined, then the validity of the operation is determined, and the valid operation is performed. The specific process is shown in Fig.7.

Fig.7 is a flow chart of a process for determining the validity of an operation in a method for operation processing according to an embodiment of the invention. In this determination process, the method is performed only when the network element service operation is a valid service operation. The method includes the steps as follows.

In Step 600, it is determined whether the message sent by the network element is an SAR message.

In Step 601, if the message sent by the network element is an SAR message, the operation carried in the SAR message flow is determined; otherwise, the process proceeds to Step 604, and then terminates.

In Step 602, it is determined whether the operation is a valid operation.

In Step 603, if the operation is a valid operation, the operation is performed; otherwise, the process proceeds to Step 604.

In Step 604, the process is handled according to the existing process.

In an IMS network, when a user is in Not Registered state and the S-CSCF initiates a Re-registration operation via an SAR message flow, the Re-registration operation carried in the SAR message flow is apparently not a valid operation. In this case, the HSS shall reject to perform the RE_REGISTRATION operation. If the HSS performs the invalid Re-registration operation, hidden troubles on operational safety may be brought to data stored in the HSS. Similarly, the above validity problem also exists in other operations carried in an SAR message flow, such as REGISTRATION and DEREGISTRATION operations. Therefore, if the HSS can perform validity determination when the HSS performs the operation carried in the SAR message flow, the HSS may be prevented from performing an invalid operation, thereby eliminating hidden troubles on user data security on the HSS side and preventing the HSS resources from being occupied by invalid operations.

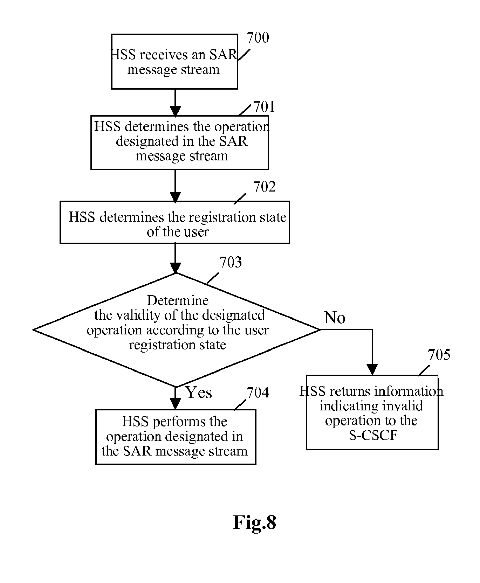

Fig.8 is a flow chart of the process for determining the operation carried in the SAR message in Fig.7.

As shown in Fig.8, in Step 700, the HSS receives an SAR message flow transferred from an S-CSCF.

In Step 701, the HSS determines the operation carried in the SAR message flow according to information carried in the SAR message flow. For example, the HSS determines the operation carried in the SAR message flow according to the value of the Attribute Value Pair (AVP) in the SAR message flow. For example, Server-Assignment-Type of 1 indicates a REGISTRATION operation, Server-Assignment-Type of 2 indicates a RE_REGISTRATION operation, Server-Assignment-Type of 5 indicates a USER_DEREGISTRATION operation, and for other values, reference may be made to 3GPP TS 29229. This operation is an operation that the S-CSCF requests the HSS to perform.

In Step 702, the HSS determines the user registration state corresponding to the above operation according to user data stored by the HSS (the user data is state information data stored by the HSS on the HSS side in a previous service operation for users who have initiated requests).

In Step 703, the HSS determines the validity of the above operation according to the user registration state. When it is determined that the above operation is a valid operation, the process proceeds to Step 704, in which the HSS performs the operation according to the existing process.

In step 703, if the HSS determines that the above operation is an invalid operation, the process proceeds to Step 705, in which the HSS may return information indicating invalid operation to the S-CSCF via an SAA message flow, in other words, the HSS does not perform the operation according to the existing process.

In Fig.7, the operation carried in the SAR message flow includes NO_ASSIGNMENT, REGISTRATION, or any one of the following operations: RE_REGISTRATION, UNREGISTERED_USER, TIMEOUT_DEREGISTRATION, TIMEOUT_DEREGISTRATION_STORE_SERVER_NAME, USER_DEREGISTRATION, USER_DEREGISTRATION_STORE_SERVER_NAME, DEREGISTRATION_TOO_MUCH_DATA, ADMINISTRATIVE_DEREGISTRATION, AUTHENTICATION_FAILURE or AUTHENTICATION_TIMEOUT. Of course, the operation carried in the SAR message flow is not limited to the above operations, and may includes other operations. The above operations will now be illustrated respectively.

In the case that the operation carried in the SAR message flow is a NO_ASSIGNMENT operation, the HSS will determine that the NO_ASSIGNMENT operation is a valid operation only when the UE registration state is Registered or Unregistered. Then, the HSS performs the NO_ASSIGNMENT operation according to the existing method, such as the specifications of the existing protocols, in other words, the operation scenario is: when the S-CSCF needs to re-pull the user service data due to, for example, failures, it initiates the operation to the HSS. In the above process for determining the validity of the NO_ASSIGNMENT, if the user's registration state is other state, such as Not Registered, the HSS determines that the NO_ASSIGNMENT operation is an invalid operation, and in this case, the HSS does not perform the NO_ASSIGNMENT operation, and may reply information indicating invalid operation to the S-CSCF via an SAA message flow.

In the case that the operation carried in the SAR message flow is a REGISTRATION operation, the HSS determines that the REGISTRATION operation is a valid operation only when the UE registration state is Authentication Pending or Unregistered. Then, the HSS performs the REGISTRATION operation according to the existing method, such as the specifications of the existing protocols. When the user is registered for the first time, the S-CSCF initiates a registration notification operation to the HSS after the authentication is passed. In the above process for determining the validity of the REGISTRATION operation, if the user is in other registration states, such as Registered or Not Registered, the HSS determines that the REGISTRATION operation is an invalid operation, and in this case, the HSS will not perform the REGISTRATION operation, and may reply information indicating invalid operation to the S-CSCF via an SAA message flow.

In the case that the operation carried in the SAR message flow is a RE_REGISTRATION operation, the HSS determines the RE_REGISTRATION operation is a valid operation only when the UE registration state is Registered. Then, the HSS performs the RE_REGISTRATION operation according to the existing method, such as the specifications of the existing protocols. In the above process for determining the validity of the RE_REGISTRATION operation, if the user is in other registration states such as Authentication Pending, Unregistered or Not Registered, the HSS determines that the RE_REGISTRATION operation is an invalid operation, and in this case, the HSS does not perform the RE_REGISTRATION operation, and may reply information indicating invalid operation to the S-CSCF via an SAA message flow.

In the case that the operation carried in the SAR message flow is an UNREGISTERED_USER operation, the HSS determines that the UNREGISTERED_USER operation is a valid operation only when the UE state is Not Registered. Then, the HSS performs the UNREGISTERED_USER operation according to the existing method, such as the specifications of the existing protocols. In the above process for determining the validity of the UNREGISTERED_USER operation, if the user is in other registration states such as Registered, Unregistered or Authentication Pending, the HSS determines that the UNREGISTERED_USER operation is an invalid operation, and in this case, the HSS does not perform the UNREGISTERED_USER operation, and may reply information indicating invalid operation to the S-CSCF via an SAA message flow.

In the case that the operation carried in the SAR message flow is a TIMEOUT_DEREGISTRATION operation, the HSS determines that the TIMEOUT_DEREGISTRATION operation is a valid operation only when the UE state is Registered. Then, the HSS performs the TIMEOUT_DEREGISTRATION operation according to the existing method, such as the specifications of the existing protocols. In the above process for determining the validity of the TIMEOUT_DEREGISTRATION operation, if the user is in other registration states such as Authentication Pending, Unregistered, or Not Registered, the HSS determines that the TIMEOUT_DEREGISTRATION operation is an invalid operation, and in this case, the HSS does not perform the TIMEOUT_DEREGISTRATION operation, and may reply information indicating invalid operation to the S-CSCF via an SAA message flow.

In the case that the operation carried in the SAR message flow is a TIMEOUT_DEREGISTRATION_STORE_{_} SERVER_NAME operation, the HSS determines that the TIMEOUT_DEREGISTRATION_STORE_SERVER_NAME operation is a valid operation only when the UE state is Registered. Then, the HSS performs the TIMEOUT_DEREGISTRATION_STORE_SERVER_NAME operation according to the existing method, such as the specifications of the existing protocols. In the above process for determining the validity of the TIMEOUT_DEREGISTRATION_STORE_SERVER_NAME operation, if the user is in other registration states such as Authentication Pending, Unregistered, or Not Registered, the HSS determines that the TIMEOUT_DEREGISTRATION_STORE_ SERVER_NAME operation is an invalid operation, and in this case, the HSS does not perform the TIMEOUT_DEREGISTRATION_STORE_SERVER_NAME operation, and may reply information indicating invalid operation to the S-CSCF via an SAA message flow.

In the case that the operation carried in the SAR message flow is a USER_DEREGISTRATION operation, the HSS determines that the USER_DEREGISTRATION operation is a valid operation only when the UE state is Registered. Then, the HSS performs the USER_DEREGISTRATION operation according to the existing method, such as the specifications of the existing protocols. In the above process for determining the validity of the USER_DEREGISTRATION operation, if the user is in other registration states such as Authentication Pending, Unregistered or Not Registered, the HSS determines that the USER_DEREGISTRATION operation is an invalid operation, and in this case, the HSS does not perform the USER_DEREGISTRATION operation, and may reply information indicating invalid operation to the S-CSCF via an SAA message flow.

In the case that the operation carried in the SAR message flow is a USER_DEREGISTRATION_STORE_ SERVER_NAME operation, the HSS determines that the USER_DEREGISTRATION_STORE_SERVER_NAME operation is a valid operation only when the UE state is Registered. Then, the HSS performs the USER_DEREGISTRATION_STORE_{_} SERVER_NAME operation according to the existing method, such as the specifications of the existing protocols. In the above process for determining the validity of the USER_DEREGISTRATION_STORE_ SERVER_NAME operation, if the user is in other registration states such as Authentication Pending, Unregistered or Not Registered, the HSS determines that the USER_DEREGISTRATION_STORE_ SERVER_NAME operation is an invalid operation, and in this case, the HSS does not perform the USER_DEREGISTRATION_STORE_ SERVER_NAME operation, and may reply information indicating invalid operation to the S-CSCF via an SAA message flow.

In the case that the operation carried in the SAR message flow is a DEREGISTRATION_TOO _MUCH_DATA operation, the HSS determines that the DEREGISTRATION_TOO_MUCH_DATA operation is a valid operation only when the UE state is Authentication Pending, Registered or Unregistered. Then, the HSS performs the DEREGISTRATION_TOO _MUCH_DATA operation according to the existing method, such as the specifications of the existing protocols. In the above process for determining the validity of the DEREGISTRATION_TOO_MUCH_DATA operation, if the user is in other registration states such as Not Registered, the HSS determines that the DEREGISTRATION_TOO_MUCH_DATA operation is an invalid operation, and in this case, the HSS does not perform the DEREGISTRATION_TOO_MUCH_DATA operation, and may reply information indicating invalid operation to the S-CSCF via an SAA message flow.

In the case that the operation carried in the SAR message flow is a ADMINISTRATIVE_DEREGISTRATION operation, the HSS determines that the ADMINISTRATIVE_DEREGISTRATION operation is a valid operation only when the UE state is Registered or Unregistered. Then, the HSS performs the ADMINISTRATIVE_DEREGISTRATION operation according to the existing method, such as the specifications of the existing protocols. In the above process for determining the validity of the ADMINISTRATIVE_DEREGISTRATION operation, if the user is in other registration states such as Not Registered, the HSS determines that the ADMINISTRATIVE_DEREGISTRATION operation is an invalid operation, and in this case, the HSS does not perform the ADMINISTRATIVE_DEREGISTRATION operation, and may reply information indicating invalid operation to the S-CSCF via an SAA message flow.

In the case that the operation carried in the SAR message flow is a AUTHENTICATION_FAILURE operation, the HSS determines that the AUTHENTICATION_FAILURE operation is a valid operation only when the UE state is Authentication Pending or Unregistered. Then, the HSS performs the AUTHENTICATION_FAILURE operation according to the existing method, such as the specifications of the existing protocols. In the above process for determining the validity of the AUTHENTICATION_FAILURE operation, if the user is in other registration states such as Registered or Not Registered, the HSS determines that the AUTHENTICATION_FAILURE operation is an invalid operation, and in this case, the HSS does not perform the AUTHENTICATION_FAILURE operation, and may reply information indicating invalid operation to the S-CSCF via an SAA message flow.

In the case that the operation carried in the SAR message flow is a AUTHENTICATION_TIMEOUT operation, the HSS determines that the AUTHENTICATION_TIMEOUT operation is a valid operation only when the UE state is Authentication Pending or Unregistered. Then, the HSS performs the AUTHENTICATION_TIMEOUT operation according to the existing method, such as the specifications of the existing protocols. In the above process for determining the validity of the AUTHENTICATION_TIMEOUT operation, if the user is in other registration states such as Registered or Not Registered, the HSS determines that the AUTHENTICATION_TIMEOUT operation is an invalid operation, and in this case, the HSS does not perform the AUTHENTICATION_TIMEOUT operation, and may reply information indicating invalid operation to the S-CSCF via an SAA message flow.

In the processes described in the above embodiments, the information indicating invalid operation may be DIAMETER_ERROR_IN_ASSIGNMENT_TYPE, and may be carried in Experimental-Result-Code of the SAA message flow, in other words, the HSS replies to S-CSCF the SAA message flow of which the Experimental-Result-Code equals to DIAMETER_ERROR_IN_ASSIGNMENT_TYPE.

The operation carried in the SAR message flow according to the embodiments of the invention is not be limited to the above examples. Moreover, the HSS may only perform validity determination on one or more of the above exemplified operations. All the processes, which perform a valid operation after the HSS determines the validity of the operation carried in the SAR message flow in conjunction with the registration state of the user, should fall into the scope of the invention.

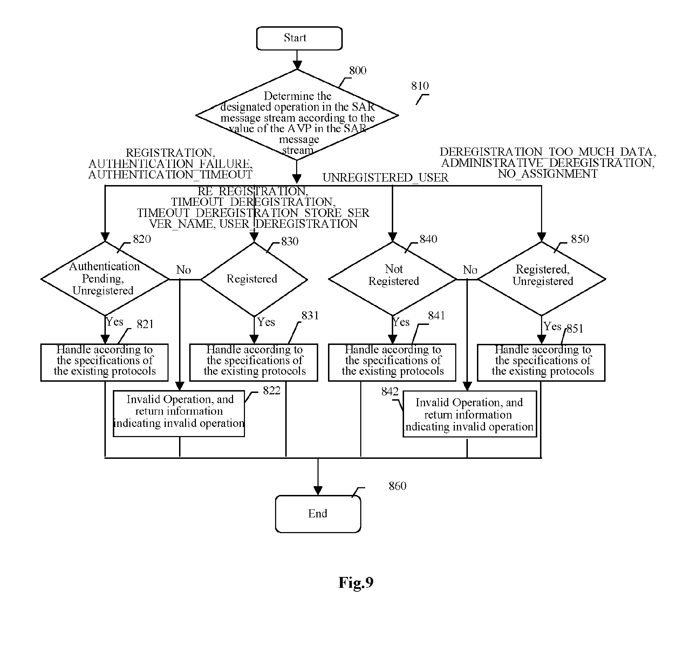

Fig.9 is another flow chart showing the process for determining the operation carried in the SAR message of Fig.7.

As shown in Fig.9, in Step 800, the HSS receives an SAR message flow transferred from an S-CSCF, and the process of validity determination according to an embodiment of the invention starts.

In Step 810, the HSS determines the operation carried in the SAR message flow according to the value of the AVP in the SAR message flow. If the operation is a REGISTRATION operation, an AUTHENTICATION_FAILURE operation or an AUTHENTICATION_TIMEOUT operation, the process proceeds to Step 820, in which the HSS determines whether the user registration state is Authentication Pending or Unregistered. If the HSS determines that the user registration state is Authentication Pending or Unregistered, the process proceeds to Step 821, in which the HSS performs the operation carried in the SAR message flow according to the specifications of the existing protocols. Then the process proceeds to Step 860, in which the process of validity determination and performing of the operation carried in the SAR message flow terminates.

In Step 820, if the HSS determines that the user registration state is not Authentication Pending or Unregistered, the process proceeds to Step 822, in which the HSS replies information indicating invalid operation, for example, an SAA message flow of which the Experimental-Result-Code equals to DIAMETER_ERROR_ IN_ASSIGNMENT_TYPE, to the S-CSCF. Then the process proceeds to Step 860, in which the process of validity determination and performing of the operation carried in the SAR message flow terminates.

In Step 810, if the HSS determines that the operation carried in the SAR message flow is a RE_REGISTRATION operation, a TIMEOUT_DEREGISTRATION operation, a TIMEOUT_DEREGISTRATION_STORE_SERVER_NAME operation, a USER_DEREGISTRATION operation or a USER_DEREGISTRATION_STORE_SERVER_NAME operation according to the value of the AVP in the SAR message flow, the process proceeds to Step 830, in which the HSS determines whether the user registration state is Registered. If the HSS determines that the user registration state is Registered, the process proceeds to Step 831, in which the HSS performs the operation carried in the SAR message flow according to the specifications of the existing protocols. Then the process proceeds to Step 860, in which the process of validity determination and performing of the operation carried in the SAR message flow terminates.

In Step 830, if the HSS determines that the user registration state is not Registered, the process proceeds to Step 822, in which the HSS replies information indicating invalid operation, for example, an SAA message flow of which the Experimental-Result-Code equals to DIAMETER_ERROR_ IN_ASSIGNMENT _TYPE, to the S-CSCF. Then the process proceeds to Step 860, in which the process of validity determination and performing of the operation carried in the SAR message flow terminates.

In Step 810, if the HSS determines that the operation carried in the SAR message flow is UNREGISTERED_USER according to the value of the AVP in the SAR message flow, the process proceeds to Step 840, in which the HSS determines whether the user registration state is Unregistered or Not Registered. If the HSS determines that the user registration state is Unregistered or Not Registered, the process proceeds to Step 841, in which the HSS performs the operation carried in the SAR message flow according to the specifications of the existing protocols. Then the process proceeds to Step 860, in which the process of validity determination and performing of the operation carried in the SAR message flow terminates.

In Step 840, if the HSS determines that the user registration state is not Unregistered or Not Registered, the process proceeds to Step 842, in which the HSS replies information indicating invalid operation, for example, an SAA message flow of which such as Experimental-Result-Code equals to DIAMETER_ERROR_IN_ASSIGNMENT_TYPE, to the S-CSCF. Then the process proceeds to Step 860, in which the process of validity determination and performing of the operation carried in the SAR message flow terminates.

In Step 810, if the HSS determines that the operation carried in the SAR message flow is a DEREGISTRATION_TOO_ MUCH_DAT operation, an ADMINISTRATIVE_DEREGISTRATION operation or a NO_ASSIGNMENT operation according to the value of the AVP in the SAR message flow, the process proceeds to Step 850, in which the HSS determines whether the user registration state is Registered or Unregistered. If the HSS determines that the user registration state is Registered or Unregistered, the process proceeds to Step 851, in which the HSS performs the operation carried in the SAR message flow according to the specifications of the existing protocols. Then the process proceeds to Step 860, in which the process of validity determination and performing of the operation carried in the SAR message flow terminates.

In Step 850, if the HSS determines that the user registration state is not Registered or Unregistered, the process proceeds to Step 842, in which the HSS replies information indicating invalid operation, for example, an SAA message flow of which such as Experimental-Result-Code equals to DIAMETER_ERROR_IN_ASSIGNMENT_TYPE, to the S-CSCF. Then the process proceeds to Step 860, in which the process of validity determination and performing of the operation carried in the SAR message flow terminates.

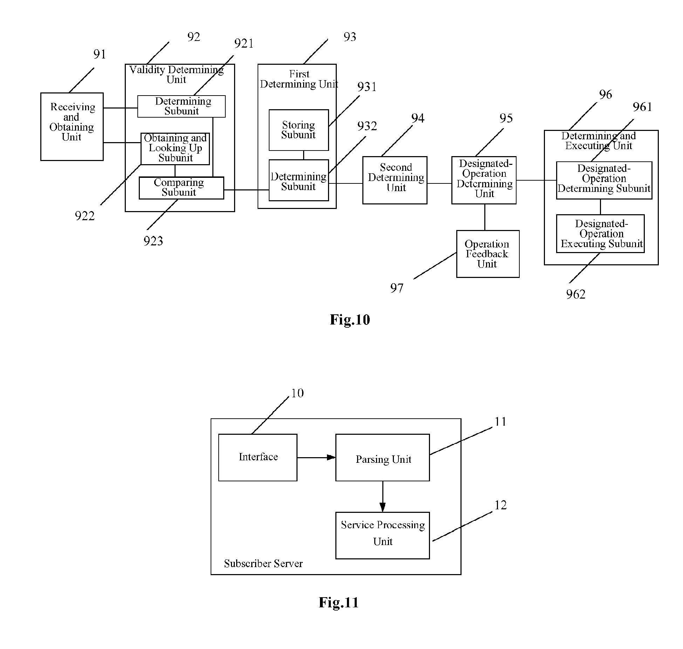

Correspondingly, one embodiment of the invention further provides a device for operation processing, which may be integrated in a server or other devices, or may exist independently. The schematic structure diagram of the device for operation processing is shown in Fig.10, which includes a receiving and obtaining unit 91, a validity determining unit 92, a first determining unit 93, a second determining unit 94, a carried-operation determining unit 95, a determining and executing unit 96 and/or an operation feedback unit 97.

The receiving and obtaining unit 91 is configured to receive a service message initiated by a peer network element and obtain the corresponding data configuration information. The validity determining unit 92 is configured to determine the validity of the network element according to the service message and the data configuration information The first determining unit 93 is configured to determine whether the service request operation sent by a valid network element is a valid service operation, and send a determination result indicating that the operation is a valid service operation. The second determining unit 94 is configured to determine whether the message sent by the network element is an SAR message according to the received determination result. The carried-operation determining unit 95 is configured to determine an operation carried in the received SAR message. The determining and executing unit 96 is coupled to the carried-operation determining unit, and configured to determine whether the operation carried in the SAR message is valid and perform the valid operation. The operation feedback unit 97 is coupled to carried-operation determining unit 95, and configured to feed back the invalid operation.

The validity determining unit 92 includes a determining subunit 921, an obtaining and searching subunit 922 and a comparing subunit 923. The determining subunit 921 is configured to determine a network element type of the network element according to the attribute value of a Command-Code in the service message. The obtaining and searching subunit 922 is configured to obtain a host name of the network element according to the service request and search for a corresponding network element type according to the host name. The comparing subunit 923 is configured to comparing the determined network element type with the searched network element type. If the two network element types are identical, the network element type of the network element is valid.

The first determining unit 93 includes a storing subunit 931 and a determining subunit 932. The storing subunit 931 is configured to store a host name pre-configured for a network element. The determining subunit 932 is coupled to the obtaining and searching subunit, and configured to determine whether the obtained host name of the network element is consistent with the pre-configured host name of the network element. If the two host names are identical, it is determined that the service operation of the network element is a valid service operation.

The determining and executing unit 96 includes a carried-operation determining subunit 961 and a carried-operation executing subunit 962. The carried-operation determining subunit 961 is coupled to the carried-operation determining unit 95, and configured to determine whether the operation is valid according to a stored user registration state, and send the valid operation if the operation is valid. The carried-operation executing subunit 962 is coupled to the carried-operation determining subunit 961, and configured to execute the received valid operation.

In the device according to this embodiment, the receiving unit 91 is configured to receive a service request sent from a peer network element, obtain the host name of the network element from the service request by parsing, obtain a corresponding message of the network element, and obtain a host name and a corresponding network element type of the network element from the message. Then, the host name obtained by parsing, and the obtained host name and the network element type from the message are all sent to the validity determining unit 92. The validity determining unit 92 searches for a corresponding network element type ID in a pre-configured network element type code table with the received host name, determines a network element type according to the network element type ID, and then compares the two network element types. If the two network element types are identical, it is indicated that the network element type is valid; otherwise, the network element type is invalid. Then, the network element with a valid network element type is sent to the first determining unit 93. The first determining unit 93 obtains a host name of the network element, and then compares the obtained host name with the pre-configured host name and network element type of the network element. If they are consistent with each other respectively, it is determined that the service operation of the network element is a valid service operation. Then, the service request is sent to the second determining unit 94. The second determining unit 94 continues to determine whether the message sent by the network element is an SAR message. If the message sent by the network element is an SAR message, the carried-operation determining unit 95 determines whether the operation carried in the SAR message flow is a valid operation according to the user registration state stored in the HSS; and if the operation is a valid operation, the determining and executing unit 96 is notified; otherwise, the operation feedback unit 97 is notified. The operation feedback unit 97 returns information indicating invalid operation to the S-CSCF via an SAA message flow, for example, an SAA message flow of which the Experimental-Result-Code equals to DIAMETER_ERROR_IN_ASSIGNMENT_TYPE.

The determining and executing unit 96 is mainly configured to perform the operation carried in the SAR message flow transferred from the S-CSCF. In the embodiment of the invention, the determining and executing unit 96 performs an operation subjected to validity verification, in other words, the determining and executing unit 96 performs the operation carried in the SAR message flow after receiving a validity determination notification from the carried-operation determining unit 95.

The specific determination and implementation process performed by the carried-operation determining unit 95 is as follow.

The carried-operation determining unit 95 determines that the operation carried in the SAR message flow is a valid operation when determining that the operation carried in the SAR message flow is a REGISTRATION operation, an AUTHENTICATION_FAILURE operation or an AUTHENTICATION_TIMEOUT operation and the user registration state is Authentication Pending or Unregistered, and notifies the determining and executing unit 96. When the user registration state is other registration state, information indicating invalid operation is returned to the S-CSCF via an SAA message flow.

The carried-operation determining unit 95 determines that the operation carried in the SAR message flow is a valid operation when determining that the operation carried in the SAR message flow is a RE_REGISTRATION operation, a TIMEOUT_DEREGISTRATION operation, a TIMEOUT_DEREGISTRATION_STORE_SERVER_NAME operation, a USER_DEREGISTRATION operation or a USER_DEREGISTRATION_STORE_SERVER_NAME operation and the user registration state is Registered, and notifies determining and executing unit 96. When the user registration state is other registration state, information indicating invalid operation is returned to the S-CSCF via an SAA message flow.

The carried-operation determining unit 95 determines that the operation carried in the SAR message flow is a valid operation when determining that the operation carried in the SAR message flow is an UNREGISTERED_USER operation and the user registration state is Not Registered, and notifies the determining and executing unit 96. When the user registration state is other registration state, information indicating invalid operation is returned to the S-CSCF via an SAA message flow.

The carried-operation determining unit 95 determines that the operation carried in the SAR message flow is a valid operation when determining that the operation carried in the SAR message flow is a DEREGISTRATION_TOO_MUCH_DATA operation, an ADMINISTRATIVE_DEREGISTRATION operation or a NO_ASSIGNMENT operation and the user registration state is Authentication Pending, Registered or Unregistered, and notifies the determining and executing unit 96. When the user registration state is other registration state, information indicating invalid operation is returned to the S-CSCF via an SAA message flow.

Additionally, an embodiment of the invention provides a server for determining the validity of a network element service operation, the schematic structure diagram of which is as shown in Fig.11. The server is a subscriber server for storing subscriber information, which includes an interface 10, a parsing unit 11 and a service processing unit 12.

The interface 10 is configured to receive a service request initiated by a network element and send the service request to the parsing unit 11.

The parsing unit 11 is configured to receive the service request sent from the interface, obtain the message initiated by a network element, obtain the host name of the network element by parsing, and send the message and the host name obtained by parsing to the service processing unit 12.

The service processing unit 12 is configured to configure a host name of the network element, receive the host name and the message sent by the parsing unit, and determine whether the network element type of the network element is valid. If the network element type of the network element is valid, the service processing unit 12 compares the received host name with the configured host name. If they are consistent with each other, it is determined that the network element service operation is a valid network element service operation. It shall be noted that the configured host name mentioned herein refers to the host name of the network element stored in Table 1.

The service processing unit 12 is further configured to compare the received host name sent by parsing unit 11 with the configured host name. If they are not consistent with each other, it is determined that the network element service operation is an invalid network element service operation, and a response message, which carries information indicating that the network element service operation is an invalid network element service operation, is generated and sent to the parsing unit. The parsing unit 11 is further configured to receive the response message and send the response message to the interface. The interface 10 receives the response message and sends the response message to the network element that initiates the service request.

It can be seen from the embodiment of the invention that the subscriber server first determines whether the network element type of the network element that initiates the service request is valid. If the network element type is valid, the subscriber server further determines whether the host name carried by the network element is consistent with the pre-configured host name. If the two host names are consistent with each other, it is determined that the network element service operation is a valid network element service operation. The network element that communicates with the subscriber server may be identified uniquely with the host name, and only one host name matching the network element that initiates the service request is configured in the network element type code table. Thus, the validity of the network element service operation may be determined accurately.

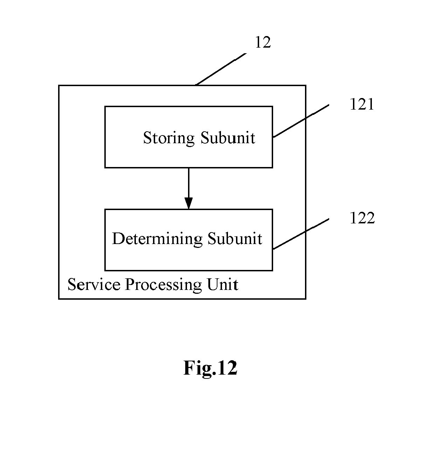

Fig.12 is a schematic structure diagram of the service processing unit shown in Fig.11. As shown in Fig.12, the service processing unit 12 includes a storing subunit 121 and a determining subunit 122.

The storing subunit 121 is configured to configure a host name of the network element and send the host name to the determining subunit 122.

The determining subunit 122 is configured to receive the host name and the message sent by the parsing unit 11, receive the host name sent by the storing subunit 121, and determine whether the network element type of the network element is valid according to the host name and the message sent by the parsing unit 11. If the network element type of the network element is valid, the determining subunit 122 compares the two received host names. If the two host names are consistent with each other, the determining subunit 122 determines that the network element service operation is a valid network element service operation. If the two host names are not consistent with each other, the determining subunit 122 determines that the network element service operation is an invalid network element service operation, and generates a response message and sends the response message to the parsing unit 11.

The network element introduced in the embodiments shown in Fig.11 and Fig.12 includes: I-CSCF, or AS carrying a PUR message in the service request.

When the network element is an S-CSCF, or an AS carrying a UDR which is used to pull the IFC data and an SNR message which is used to subscribe for the IFC data of the user:

The parsing unit 11 is further configured to obtain a network element name of the network element from the message initiated by the network element by parsing and send the network element name to the determining subunit.

The storing subunit 121 is further configured to configure a network element name of the network element and send the configured network element name to the determining subunit 122.

In addition to determining whether the two host names are consistent with each other according to the received host names sent by the parsing unit 11 and the storing subunit 121 in the above embodiment of the server, the determining subunit 122 is further configured to receive the network element name sent by the parsing unit 11 and the network element name sent by the storing subunit 121, compare these two network element names, and determine that the network element service operation is a valid service operation only when the host names and the network element names are both consistent with each other, respectively. It shall be noted that the configured network element name mentioned herein refers to the network element name of the network element stored in Table 1.

When the network element is an S-CSCF and an I-CSCF, the interface is a Cx or Dx interface. When the network element is an AS, the interface is a Sh or Dh interface.

In the embodiments of the invention, the method and server for implementing the technical solutions of the invention are introduced by taking the case in which the subscriber server is an HSS as an example. However, other subscriber servers according to the same principle are also within the scope of the invention.

Thus it can be seen that in the embodiments of the invention, on one hand, whether the network element type is valid and whether the host names are consistent with each other are determined. If they are consistent, the validity of a network element service operation is determined. If the service operation is valid, on the other hand, the network element is determined in view of logic, in other words, validity determination is performed on the various operation definations carried by the S-CSCF via an SAR message flow. If the operation is a valid operation, the operation is performed. In other words, the operation carried in the SAR message flow may be filtered by determining the validity of the operation carried in the SAR message flow in conjunction with the registration state of the user, so that the HSS may be prevented from performing an invalid operation. Thus, the HSS resources occupied by invalid operations may be reduced, and at the same time, hidden troubles on the security of data storage in the HSS may be decreased. Additionally, when the HSS determines that the operation carried in the SAR message flow is an invalid operation, it returns information indicating invalid operation to the S-CSCF, so that the SAR/SAA interaction process is perfected, and the security of user data on the HSS side and the processing efficiency of valid operation are improved. At the same time, it is ensured that the validity of a network element service operation can be determined accurately, thus the security of user data and the reliability of IMS service are ensured.

The preferred embodiments of the invention are described above for illustrative purpose but not for limitation purpose. Various modifications, equivalents and variations made without departing from the spirit and the principle of the invention are tended to fall into the scope of the invention as defined by the appended claims.

## Claims

1. A method for operation processing in an IP Multimedia Subsystem (IMS), comprising an interaction process of a Server-Assignment-Request (SAR) and Server-Assignment-Answer (SAA) message flows between a Serving Call Session Control Function (S-CSCF) and a Home Subscriber Server (HSS), wherein during the interaction process, the method comprises:
determining, by the HSS, a operation carried in an SAR message flow according to information carried in the SAR message flow, after receiving the SAR message flow transferred from the S-CSCF; and
performing, by the HSS, the operation when it is determined that the operation is a valid operation according to a user registration state.

2. The method for operation processing in an IP Multimedia Subsystem according to claim 1, wherein when the operation carried in the SAR message flow is a REGISTRATION operation, an AUTHENTICATION_FAILURE operation or an AUTHENTICATION_TIMEOUT operation, the performing the designed operation comprises
determining, by the HSS, that the REGISTRATION operation, the AUTHENTICATION_FAILURE operation or the AUTHENTICATION_TIMEOUT operation is a valid operation when the user registration state is Authentication Pending or Unregistered, and performing the operation.

3. The method for operation processing in an IP Multimedia Subsystem according to claim 1, wherein when the operation carried in the SAR message flow is a RE_REGISTRATION operation, a TIMEOUT_DEREGISTRATION operation, a TIMEOUT_ DEREGISTRATION_STORE_SERVER_NAME operation, a USER_DEREGISTRATION operation or a USER_DEREGISTRATION_STORE_SERVER_NAME operation, the performing the designed operation comprises
determining, by the HSS, that the RE_REGISTRATION operation, the TIMEOUT_DEREGISTRATION operation the TIMEOUT_DEREGISTRATION_STORE_SERVER_NAME operation, the USER_DEREGISTRATION operation or the USER_DEREGISTRATION_STORE_SERVER_NAME operation is a valid operation when the user registration state is Registered, and performing the operation.

4. The method for operation processing in an IP Multimedia Subsystem according to claim 1, wherein when the operation carried in the SAR message flow is an UNREGISTERED_USER operation, the performing the designed operation comprises
determining, by the HSS, that the UNREGISTERED_USER operation is a valid operation when the user registration state is Unregistered or Not Registered, and performing the operation.

5. The method for operation processing in an IP Multimedia Subsystem according to claim 1, wherein when the operation carried in the SAR message flow is a DEREGISTRATION_TOO_MUCH_DATA operation, an ADMINISTRATIVE_DEREGISTRATION operation or a NO_ASSIGNMENT operation, the performing the designed operation comprises
determining, by the HSS, that the DEREGISTRATION_TOO_MUCH_DATA operation or the ADMINISTRATIVE_DEREGISTRATION operation is a valid operation when the user registration state is Registered or Unregistered, and performing the operation.

6. A method for determining validity of a network element service operation in an IP Multimedia Subsystem (IMS), comprising: pre-configuring a first host name of a network element;
receiving a service request initiated by the network element, obtaining a message initiated by the network element, and obtaining a second host name of the network element by parsing;
determining whether a first network element type of the network element is valid according to the second host name and the message;
when the first network element type of the network element is valid, comparing second the host name obtained by parsing with the configured first host name, and determining that the network element service operation is a valid network element service operation when the second host name obtained by parsing and the configured first host name are consistent with each other.

7. The method for determining the validity of a network element service operation according to claim 6, wherein the determining whether a first network element type of the network element is valid further comprises: determining that the network element service operation is an invalid network element service operation and terminating the determining whether a first network element type of the network element is valid when it is determined that the first network element type is invalid.

8. The method for determining the validity of a network element service operation according to claim 6 or 7, wherein the first host name, a network element type identifier and a first network element name of the network element are pre-configured in a network element type code table, and the determining whether a first network element type of the network element is valid comprises
searching for the network element type identifier of the network element in the network element type code table according to the second host name, and determining a second network element type of the network element according to the network element type identifier;
determining the first network element type according to the message; and
comparing the first and second network element types, and determining that the first network element type is valid when the first and second network element types are consistent with each other.

9. The method for determining the validity of a network element service operation according to claim 8, wherein the determining the first network element type according to the message comprises
determining type of the message, and determining that the first network element type is Interrogating Call Session Control Function when the message comprises a user authentication request message and/or a location info request message;
determining that the first network element type is Serving Call Session Control Function when the message comprises a multimedia authentication request message and/or a service allocation request message; and
determining that the first network element type is Application Server when the message comprises a user data request message and/or a subscription notification request message, or a profile update request message.

10. The method for determining the validity of a network element service operation according to claim 6, wherein the network element that initiates the service request comprises Interrogating Call Session Control Function or Application Server carrying a profile update request message.

11. The method for determining the validity of a network element service operation according to claim 8, wherein when the network element that initiates the service request comprises Serving Call Session Control Function or Application Server carrying a user data request message for querying Initial Filter Criterion and/or a subscription notification request message,
the receiving the service request initiated by the network element, obtaining a message initiated by the network element and obtaining the second host name of the network element further comprises obtaining a second network element name of the network element; and
the comparing the second host name obtained by parsing with the configured first host name and determining that the network element service operation is a valid network element service operation further comprises comparing the obtained second network element name with the configured first network element name, and determining that the network element service operation is a valid network element service operation when the obtained second network element name and the configured first network element name are consistent with each other.

12. The method for determining the validity of a network element service operation according to claim 6, wherein after the comparing the second host name obtained by parsing with the configured first host name and determining that the network element service operation is a valid network element service operation, the method further comprises: determining that the network element service operation is an invalid network element service operation and terminating the method, when the second host name obtained by parsing and the configured first host name are not consistent with each other.

13. The method for determining the validity of a network element service operation according to claim 12, wherein after the determining that the network element service operation is an invalid network element service operation, the method further comprises
returning a response message to the network element.
